# EUROPÄISCHE PATENTSCHRIFT

(11) **EP 1 271 008 B1**
(45) Veröffentlichungstag und Bekanntmachung des Hinweises auf die Patenterteilung: **02.08.2006**
(21) Anmeldenummer: 02013055.5
(22) Anmeldetag: 13.06.2002
(51) Int. Cl.: F16H 61/12

(54) **Elektro-hydraulisches Steuerungssystem zum Steuern von Gangwechseln bei teil-oder vollautomatischen Getrieben von Fahrzeugen**
Electro-hydraulic control system for partially automated or automatic vehicle transmissions
Dispositif de commande pour transmissions véhiculaires automatisées partiellement ou automatiques

(30) Priorität: 18.06.2001 DE 10128805
(43) Veröffentlichungstag der Anmeldung: 02.01.2003
(73) Patentinhaber: Renk Aktiengesellschaft, 86159 Augsburg (DE)
(72) Erfinder: Naunheimer, Harald, Dr., 66386 St. Ingbert/Rohrbach (DE)
(74) Vertreter: Schober, Stefan

(56) Entgegenhaltungen:
- WO-A-90/14534
- WO-A-95/02135
- US-A- 4 351 206
- US-A- 4 535 681
- US-A- 4 841 816
- US-A- 5 445 578
- PATENT ABSTRACTS OF JAPAN Bd. 013, Nr. 033 (M-789), 25. Januar 1989 (1989-01-25) & JP 63 243553 A (HINO MOTORS LTD), 11. Oktober 1988 (1988-10-11)

## Beschreibung

Die Erfindung betrifft ein elektro-hydraulisches Steuerungssystem zum Steuern von Gangwechseln bei teil- oder vollautomatischen Getrieben gemäß dem Oberbegriff des Patentanspruchs 1.
Es ist allgemein bekannt, teil- oder vollautomatische Getriebe elektro-hydraulisch zu steuern. Bei elektro-hydraulischen Getriebesteuerungen kann zwischen Systemen unterschieden werden, die eine separate Druckmodulierungsebene aufweisen - d. h. der Arbeitsdruck für die Schaltelemente wird in einem Ölkreis erzeugt und der Steuerschieber, der diesen Arbeitsdruck zum Schaltelement führt, wird durch eine weitere Steuerebene in der Regel mit niedrigerem Öldruckniveau über ein Magnetventil geschaltet - und solchen, die eine hydraulische Direktansteuerung der Schaltelemente besitzen.
Die unsichere Größe beim automatischen Schaltvorgang ist die Totzeit zwischen einem Schaltkommando und der Wirkung am Schaltelement, welche abhängig ist vom Lüftspiel - d.h. vom Abstand der kraftübertragenden Elemente zueinander wenn sie in geöffnetem Zustand sind -, dem Verschleißzustand, den Einbautoleranzen usw. Diese Unsicherheit lässt sich durch Vorbefüllung der Gangkupplung sowie Messung des Arbeitsdrucks deutlich reduzieren und damit das Ansprechverhalten der Kupplung verbessern. Durch elektro-hydraulische Direktansteuerung jedes Schaltelements läßt sich das Schaltverhalten am wirkungsvollsten und flexibelsten beeinflussen, aber bei Ausfall einer elektrischen Einheit müssen zum Schutz der Fahrzeuginsassen und des Getriebes alle Schaltelemente deaktiviert oder die Schaltelemente eines bestimmten Ganges aktiviert werden, so daß keine Gangwechsel mehr möglich sind.
Aus US 4,351,206, die alle Merkmale des Oberbegriffes des unabhängigen Anspruchs 1 offenbart, ist ein elektrohydraulisches Steuerungssystem für ein selbsttätig geschaltetes Fahrzeuggetriebe mit hydraulisch betätigbaren Schaltelementen bekannt. Bei Ausfall der elektrischen Steuerung können über ein Handventil mehrere Vorwärtsgänge sowie der Rückwärtsgang geschaltet werden.
Die Aufgabe der Erfindung ist es, ein elektro-hydraulisches Steuerungssystem für voll- oder teilautomatisierte Getriebe zu schaffen, welches bei Ausfall eines elektrischen oder elektronischen Elements in einem Notbetrieb Schaltvorgänge ermöglicht.
Diese Aufgabe wird erfindungsgemäß durch die kennzeichnenden Merkmale des Patentanspruchs 1 gelöst.

Bei einem erfindungsgemäßen Steuerungssystem werden bei Stromausfall oder sonstigen Fehlern in der Elektronik alle Regelmagnete abgeschaltet. Der Regelventilschieber kann dann mit einer Notschalteinrichtung hydraulisch übersteuert werden. Es handelt sich um eine passive Redundanz, mit einem elektrischen "shift-by-wire"-Hauptpfad - d.h. im Normalbetrieb werden Gangwechsel durch elektrische Signale gesteuert - und einem mechanisch hydraulischen Nebenpfad, der nur bei Ausfall des ersten in Aktion tritt. Das Festhalten des letztgeschalteten Gangs bei elektrischen Fehlern, bis hin zu hydraulischer Verriegelung, wie sie bei militärischen Kettenfahrzeugen dem Stand der Technik entspricht, ist mit dem ausgewählten Lösungsansatz realisierbar.
Die Notschaltung ermöglicht es in besonders vorteilhafter Weise das Getriebe bei Ausfall der Versorgungsspannung, einem Defekt im elektronischen Steuergerät oder einer anderen elektrischen Störung behelfsmäßig zu schalten.
Das erfindungsgemäße Steuerungssystem ist besonders flexibel und läßt sich in einfacher Weise an unterschiedliche Getriebetypen anpassen.
Weitere Merkmale und Vorteile ergeben sich aus den Unteransprüchen in Verbindung mit der Beschreibung.

Nachfolgend wird die Erfindung näher erläutert. In den schematischen Zeichnungen zeigt die
- Fig. 1: ein beispielhaftes Getriebeschema eines Sechs-Gang-Getriebes und die
- Fig. 2: zeigt ein erfindungsgemäß ausgeführtes elektrohydraulisches Steuerungssystem zu diesem Getriebe.

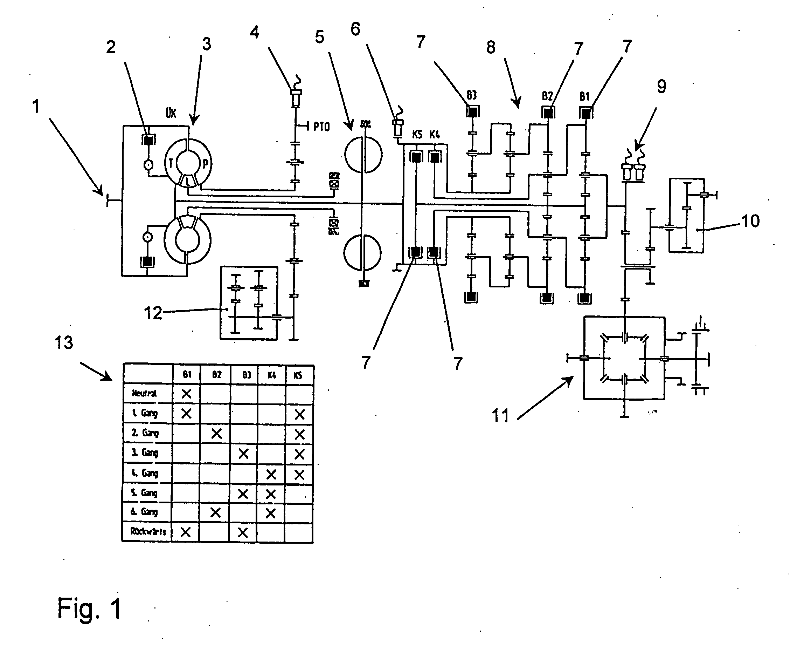

Die Fig. 1 stellt ein beispielhaftes Getriebeschema eines Sechs-Gang-Getriebes dar, bei dem eine Ausführung des erfindungsgemäßen Steuerungssystems zur Anwendung kommt. Neben der Verwendung an Getrieben in Planetenbauweise kann ein erfindungsgemäßes Steuerungssystem auch für andere Bauarten von teil- oder vollautomatischen Getrieben vorgesehen werden.
Die vom Antriebsmotor abgegebene Leistung wird über den Getriebeeingang 1 an einen herkömmlichen Drehmomentwandler 3 abgegeben. Der Drehmomentwandler ist vorzugsweise mit einer Überbrückungskupplung 2 ausgestattet. Über einen Räderzug kann das Pumpenrad des Drehmomentwandlers 3 ein Nebenabtriebsgetriebe antreiben. An einem dieser Räder ist ein Drehzahlsensor 4 angeordnet, der die Drehzahl des Antriebsmotors aufnimmt. Über einen weiteren Räderzug treibt das Pumpenrad eine Hydraulikpumpe 12 an, welche den Ölstrom zur Steuerung und Betätigung der Gangkupplungen fördert.

Auf der Turbinenradwelle des Drehmomentwandlers 3 ist vorzugsweise ein Retarder 5 angeordnet, der ein verschleißfreies Bremsen des Fahrzeuges ermöglicht. Weiterhin ist auf der Turbinenradwelle ein weiterer Drehzahlsensor 6 angeordnet, der die Eingangsdrehzahl in das Getriebe aufnimmt. Durch entsprechende Betätigung der Schaltelemente 7 lässt sich der Kraftfluss durch die Planetenradsätze 8 festlegen. Dem Schaltschema 13 ist zu entnehmen, welche Schaltelemente 7 für welchen Gang zu schalten sind. Am Eingang der Planetenradsätze 8 werden als Schaltelemente Lamellenkupplungen eingesetzt, welche durch hydraulisch betätigte Kolben geschaltet werden. Mit weiteren - als hydraulisch betätigbare Bremsen ausgeführten - Schaltelementen 7 lassen sich die drehbar gelagerten Hohlräder der Planetensätze 8 gehäusefeststellen.
Der Planetenradträger des letzten Planetenradsatzes treibt über Stirnräder in einen Getriebeabtrieb 11 - beispielsweise ein Differenzialgetriebe ein. An einem dieser Stirnräder ist ein weiterer Drehzahlsensor 9 angeordnet, der auch die Drehrichtung aufnimmt und somit Vor- oder Rückwärtsfahrt erkennt. Am Getriebeausgang wird über Stirnräder eine weitere Pumpe 10 angetrieben, welche bei stillstehendem Motor beim Anschleppen des Fahrzeuges für den nötigen Arbeits- und Steuerungsdruck im Hydrauliksystem sowie den Schmieröldruck sorgt.

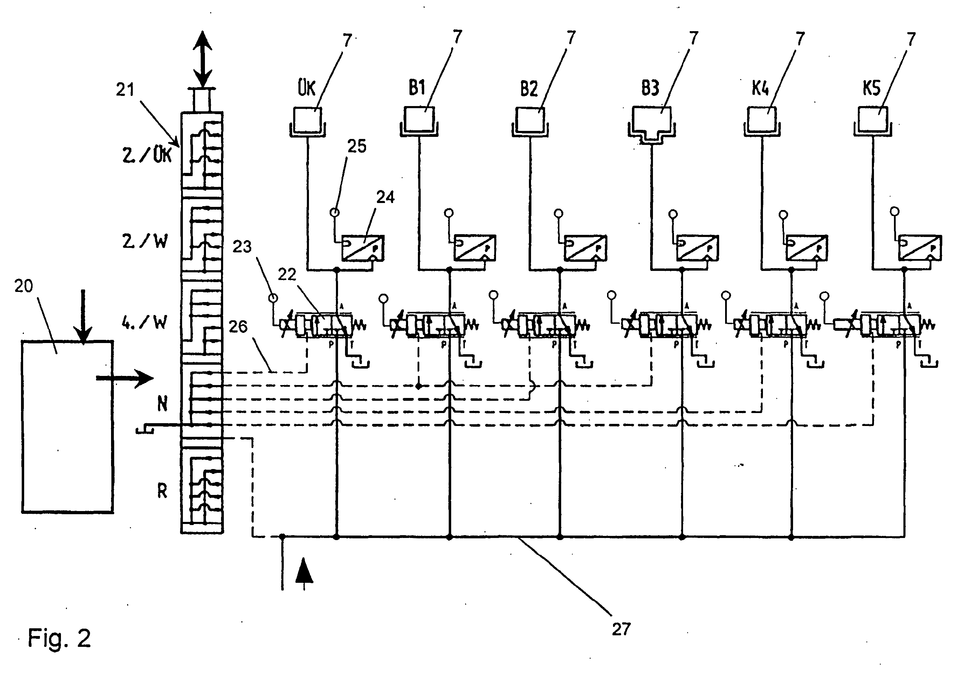

Die Figur 2 zeigt die Elemente eines erfindungsgemäß ausgeführten elektro-hydraulischen Steuerungssystems, wie es beim beispielhaften Getriebe gemäß Figur 1 vorgesehen ist. Jedem Schaltelement 7 ist ein Ventil 22 zugeordnet, an dem der Öldruck des Hydrauliksystems 27 ansteht. Der Öldruck des Hydrauliksystems 27 kann durch eine der in Figur 1 gezeigten Pumpen 10 oder 12 erzeugt werden.
Vorzugsweise werden elektromagnetisch ansteuerbare 3/2 Wegeproportionalventile eingesetzt, die im Normalbetrieb durch eine Steuerungseinheit 20 elektrisch gesteuert und geregelt werden. Die Steuerungseinheit 20 kann Lastschaltungen realisieren, d. h. Gangwechsel steuern, bei welchen der Leistungsfluß im Getriebe nicht unterbrochen wird. Dazu legt die Steuerungseinheit 20 den Zeitpunkt der ÖIbefüllung des zu schaltenden Schaltelementes 7 fest und regelt im Bereich der Synchronisierung die Drehmomentübertragung über den momentanen Gang herunter, während die Fähigkeit Drehmoment durch den nächsten Gang übertragen zu können gesteigert wird. Für solche Überschneidungsschaltungen muß der Öldruck in den beiden beteiligten Schaltelementen 7 so gesteuert und geregelt werden, daß einerseits keine Zugkraftunterbrechung und andererseits keine Überlastung bzw. Zerstörung der Getriebeteile eintritt. Die Überlastung bzw. Zerstörung kann durch im zeitlichen Ablauf zu große Öldrücke an den beteiligten Schaltelementen 7 verursacht werden.
Die bevorzugt eingesetzten 3/2-Wegeproportionalventile besitzen 3 Ölanschlüsse und sind durch einen ansteuerbaren Elektromagneten regelbar. Die Öldurchflußmenge verhält sich dabei proportional zum elektrischen Strom am Elektromagneten. Der Elektromagnet des Ventils 22 wird von der Steuerungseinheit 20 durch einen elektrischen Steueranschluß 23 so angesteuert, daß er über die Förderstrommenge des Hydrauliksystemdrucks 27 den Öldruck am Schaltelement 7 entsprechend der Steuerimpulse einstellt. In der Arbeitsleitung kann vorzugsweise nahe dem Zylinder des Schaltelements 7 ein Drucksensor 24 vorgesehen werden, der über einen elektrischen Signalanschluss 25 mit der Steuerungseinheit 20 verbunden ist.
Die Signale der in Figur 1 gezeigten Drehzahlsensoren 4, 6, 9 werden ebenfalls in der Steuerungseinheit 20 verarbeitet und können für eine kombinierte Druck-/Drehzahlregelung verwendet werden.
Im stromlosen Zustand werden die Ventile 22 durch eine Feder in eine Ausstellung gebracht. Dabei ist die - mit dem Schaltelement 7 verbundene - Arbeitsleitung mit der Rückflußleitung zum Vorratsöltank verschaltet und der anstehende Öldruck des Hydrauliksystems 27 ist gesperrt.

Durch die Erfindung ist es möglich, die Vorteile der elektrohydraulischen Direktansteuerung jedes einzelnen Schaltelements, wie beispielsweise den Schaltungskomfort zu nutzen und bei Ausfall einer elektronischen/elektrischen Komponente weiterhin über einen mechanisch/hydraulischen Notschalter verschiedene Gänge zu schalten. Dazu kann die elektromagnetische Ansteuerung jedes Ventils 22 auch hydraulisch übersteuert werden. Bei den vorzugsweise eingesetzten Ventilen 22 sind der Elektromagnet, der zum Schalten bzw. Regeln mit dem Steuerschieber verbunden ist, der Druckraum für das Arbeitsöl sowie ein Druckraum zum hydraulischen Übersteuern in einer Baueinheit integriert, wobei der Schieber die verschiedenen Druckräume gegeneinander abtrennt und entsprechend der Stellung seiner Steuerkanten die entsprechenden Wege freigibt bzw. sperrt. Der Druckraum zum hydraulischen Übersteuern ist an eine Hydrauliksteuerleitung 26 angeschlossen, welche das Ventil 22 bei Druckbeaufschlagung einschaltet, d. h. den Arbeitsdruck des Hydrauliksystems 27 am Schaltelement 7 zur Wirkung bringt.
An einem Notschaltschieber 21 ist für jeden im Notbetrieb schaltbaren Gang sowie für die Neutralstellung des Getriebes eine entsprechende Schaltstellung und für jedes - einem Schaltelement 7 zugeordnetem - Ventil 22 ein Druckanschluß vorzusehen. In der jeweiligen Schaltstellung des Notschaltschiebers 21 wird der Druck des Hydrauliksystems 27 über entsprechend vorgesehene Kanäle an die einzuschaltenden Ventile 22 geführt und über entsprechende andere Kanäle wird das Öl von den auszuschaltenden Ventilen 22 in den Vorratstank geleitet. In der Figur 2 ist lediglich eine beispielhafte Ausführung des erfindungsgemäßen Notschaltschiebers 21 dargestellt. Die erste Stellung schaltet bei geschlossener Überbrückungskupplung des Drehmomentwandlers 3 den 2. Gang, um das Fahrzeug Anschleppen zu können. In weiteren Stellungen läßt sich der 2., 4. Gang oder der Rückwärtsgang jeweils über den Drehmomentwandler 3 betreiben. Eine fünfte Stellung bringt das Getriebe in die Neutralstellung.
Der Notschaltschieber 21 ist vorzugsweise in einen hydraulischen Steuerungsblock am Getriebe integriert und läßt sich mechanisch manuell in die verschiedenen Schaltstellungen verschieben. Es können mechanische Übertragungselemente vorgesehen werden, durch die der Notschaltschieber 21 vom Fahrerhaus aus schaltbar ist.
Die Steuerungseinheit 20 kann über weitere Sensoren mit Informationen über die elektrischen Einrichtungen, Umgebungseinflüsse oder mit sonstigen Signalen gespeist werden und kann beispielsweise bei Auftreten von Druckabweichungen zwischen unbedenklichen Stör- oder Fehlersignalen, welche nur kurzzeitig auftreten und z.B. elektromagnetisch erzeugt oder durch Erschütterungen verursacht werden sowie tatsächlichen Falschdrücken, die zur Zerstörung des Getriebes führen könnten, unterscheiden. Bei Erkennen von tatsächlichen Fehlern wie beispielsweise Kurzschlüssen oder der Bedienung des Notschaltschiebers 21 trotz aktiver elektrohydraulischer Steuerung, werden die elektrischen Einrichtungen stromlos geschaltet und die Ventile 22 fallen in den geöffneten Zustand. Damit ist ein Mißbrauchsschutz des Notschaltschiebers 21 gewährleistet, der die hydraulische Übersteuerung der Ventile 22 nur in stromlosen Zustand durchführen soll.
Neben der Erkennung der Bedienung bzw. Fehlbedienung des Notschaltschiebers 21 durch die oben beschriebenen Fehldrücke, können auch weitere Sensoren, wie beispielsweise Mikroschalter, direkt am Notschaltschieber 21 und/oder einer zugehörigen Betätigungseinrichtung, z.B. im Fahrerhaus, angeordnet werden. Diese geben entsprechende Signale an die Steuerungseinheit 20 weiter, welche daraufhin die entsprechenden Maßnahmen einleiten kann.
Bei den vorzugsweise eingesetzten 3/2-Wegeventilen läßt sich in vorteilhafter Weise der Strom für den Nulldurchgang einstellen. Das heißt der elektrische Strom der anzulegen ist, um das Ventil zu sperren läßt sich am Ventil verstellen.
Als Alternative zu den beschriebenen Wege-Ventilen können auch andere nach gleichem Wirkungsprinzip funktionierende Ventile vorgesehen werden.

Durch das erfindungsgemäße elektro-hydraulische Steuerungssystem ist eine flexible modulare Einheit geschaffen worden, welche bei erhöhtem Schaltkomfort eine hohe Funktionssicherheit - unabhängig von Veränderungen äußerer Parameter (z.B. Temperatur etc.) sowie unabhängig von Veränderungen innerer Parameter (z.B. Verschleiß, Reibwertänderungen etc.) - gewährleistet und unter Eliminierung der Einflüsse von Bauteiltoleranzen zur Steuerung verschiedener Getriebetypen einsetzbar ist sowie bei Ausfall einer elektronischen oder elektrischen Komponente in einem Notbetrieb weiterhin Schaltvorgänge ermöglicht.

### Bezugszeichenliste

- 1: Getriebeeingang
- 2: Überbrückungskupplung
- 3: Drehmomentwandler
- 4: Drehzahlsensor
- 5: Retarder
- 6: Drehzahlsensor
- 7: Schaltelement
- 8: Planetensätze
- 9: Drehzahlsensor
- 10: Pumpe
- 11: Getriebeabtrieb
- 12: Pumpe
- 13: Schaltschema

- 20: Steuerungseinheit
- 21: Notschaltschieber
- 22: Ventil
- 23: Steueranschluß
- 24: Drucksensor
- 25: Signalanschluß
- 26: Hydrauliksteuerleitung
- 27: Hydrauliksystem

## Patentansprüche

1. Elektro-hydraulisches Steuerungssystem zum Steuern von Gangwechseln bei teil- oder vollautomatischen Getrieben von Fahrzeugen mit mehreren hydraulisch betätigbaren Schaltelementen (7), welchen jeweils ein Ventil (22) zugeordnet ist, einer Steuerungseinheit (20) mit Signaleingang für mindestens einen Sensor (4, 6, 9, 24) und Signalausgang zum einzelnen elektrischen Ansteuern von mindestens einem der Ventile (22) zum Betätigen eines der Schaltelemente (7), wobei die elektrische Ansteuerung aller Ventile (22) abschaltbar und die Gesamtheit der Ventile (22) durch einen einzigen Notschaltschieber (21) hydraulisch steuerbar sind, **dadurch gekennzeichnet, dass** für jedes Schaltelement (7) genau ein einzeln elektrohydraulisch ansteuerbares Regelventil (22) vorgesehen ist, bei welchem die elektromagnetische Schalt/Regeleinheit, ein Druckraum zum hydraulischen Notübersteuern sowie Druckräume für den Arbeitsöldruck jeweils in einem Gehäuse integriert sind.

2. Elektro-hydraulisches Steuerungssystem nach Anspruch 1, **dadurch gekennzeichnet, dass** die Schaltelemente (7) durch Hydraulikkolben schaltbare Reibungskupplungen oder Bremsen sind und das durch sie übertragbare Drehmoment oder Bremsmoment über den Öldruck einstellbar ist.

3. Elektro-hydraulisches Steuerungssystem nach einem der vorhergehenden Ansprüche, **dadurch gekennzeichnet, dass** der durch das Ventil (22) fließende Volumenstrom proportional zum elektrischen Strom ist und der elektrische Strom, welcher für die Sperrstellung des Ventils (22) anzulegen ist, einstellbar ist.

4. Elektro-hydraulisches Steuerungssystem nach einem der vorhergehenden Ansprüche, **dadurch gekennzeichnet, dass** an jedem Schaltelement (7) ein Drucksensor (24) und am Getriebe mindestens ein Drehzahlsensor (4; 6; 9) vorgesehen ist, deren Signale in der Steuerungseinheit (20) auswertbar sind.

5. Elektro-hydraulisches Steuerungssystem nach einem der vorhergehenden Ansprüche, **dadurch gekennzeichnet, dass** im Normalbetrieb jeder Gangwechsel alleine durch elektrische Signalübermittlung eingeleitet und von der Steuerungseinheit (20) durch eine kombinierte Druck-/Drehzahlregelung steuerbar ist.

6. Elektro-hydraulisches Steuerungssystem nach einem der vorhergehenden Ansprüche, **dadurch gekennzeichnet, dass** der Notschaltschieber (21) mechanisch betätigbar ist und über mechanische Übertragungselemente von einem Fahrerhaus aus schaltbar ist.

7. Elektro-hydraulisches Steuerungssystem nach einem der vorhergehenden Ansprüche, **dadurch gekennzeichnet, dass** bei Betätigung des Notschaltschiebers (21) alle elektrischen Steuerungseinrichtungen stromlos geschaltet werden.

8. Elektro-hydraulisches Steuerungssystem nach einem der vorhergehenden Ansprüche, **dadurch gekennzeichnet, dass** am Notschaltschieber (21) und/oder an einer zugehörigen Betätigungseinrichtung Sensoren vorgesehen sind, welche die Betätigung des Notschaltschiebers (21) erkennen und die entsprechenden Signale an die Steuerungseinrichtung (20) weitergeben.

9. Elektro-hydraulisches Steuerungssystem nach einem der vorhergehenden Ansprüche, **dadurch gekennzeichnet, dass** das Ventil (22) sowohl elektrisch als auch hydraulisch ansteuerbar ist.

## Claims

1. An electro-hydraulic control system for the control of gear changes on partially or fully automatic transmissions for road vehicles having multiple hydraulically actuated switching elements (7) to each of which is assigned a valve (22), a control unit (20) with a signal input for at least one sensor (4, 6, 9, 24) and a signal output for the individual electrical actuation of at least one of the valves (22) for the operation of one of the switching elements (7), wherein the electrical actuation of all valves (22) can be switched off and the totality of the valves (22) hydraulically controlled by a single emergency shift spool valve (21), **characterised in that** for each of the switching elements (7) precisely one electro-hydraulically actuatable control valve (22) is provided, in which the electromagnetic switching/control unit, a pressure chamber for hydraulic emergency override and pressure chambers for the working oil pressure are integrated into one housing.

2. An electro-hydraulic control system in accordance with claim 1, **characterised in that** the switching elements (7) are friction clutches or brakes that can be switched by hydraulic pistons and that the torque or braking force they are able to transfer is adjustable by way of the oil pressure.

3. An electro-hydraulic control system in accordance with one of the preceding claims, **characterized in that** the volume of fluid flowing through the valve (22) is proportional to the electric current and the electric current to be applied for the shut-off position of the valve (22) is variable.

4. An electro-hydraulic control system in accordance with one of the preceding claims, **characterized in that** a pressure sensor (24) is provided on each switching element and at least one speed-of-rotation sensor (4; 6; 9) is provided on the gearbox, the signals from which can be evaluated in the control unit (20).

5. An electro-hydraulic control system in accordance with one of the preceding claims, **characterized in that** in normal operation each gear change is triggered by electrical signal transmission alone and can be controlled by the control unit (20) by a combination of pressure/speed-of-rotation regulation.

6. An electro-hydraulic control system in accordance with one of the preceding claims, **characterized in that** the emergency shift spool valve (21) can be operated mechanically and can be switched from a driver's cabin by means of mechanical transmission elements.

7. An electro-hydraulic control system in accordance with one of the preceding claims, **characterized in that** all electrical control devices are de-energized when the emergency shift spool valve (21) is actuated.

8. An electro-hydraulic control system in accordance with one of the preceding claims, **characterized in that** the emergency shift spool valve (21) and/or an associated operating device are equipped with sensors which detect the operation of the emergency shift spool valve (21) and pass the corresponding signals to the control device (20).

9. An electro-hydraulic control system in accordance with one of the preceding claims, **characterized in that** the valve (22) can be actuated both electrically and hydraulically.

## Revendications

1. Système de commande électrohydraulique des changements de vitesse dans des boîtes de vitesses partiellement ou entièrement automatiques de véhicules, comportant plusieurs éléments de changement de vitesse (7) à commande hydraulique, auxquels est chaque fois associée une vanne (22), une unité de commande (20) avec une entrée de signaux pour au moins un capteur (4, 6, 9, 24) et une sortie de signaux pour la commande électrique individuelle d'au moins une des vannes (22) pour actionner un des éléments de changement de vitesse (7), la commande électrique de toutes les vannes (22) pouvant être déconnectée et l'ensemble des vannes (22) pouvant être commandé hydrauliquement par une seule vanne de changement de vitesse de secours (21),
**caractérisé en ce qu'**
il est prévu, pour chaque élément de changement de vitesse (7) une vanne de régulation (22) à commande électrohydraulique individuelle, dans laquelle l'unité de commutation/régulation électromagnétique, une chambre de pression pour la commande hydraulique prioritaire de secours et des chambres pour la pression d'huile de travail sont intégrées chaque fois dans un carter.

2. Système de commande électrohydraulique selon la revendication 1,
**caractérisé en ce que**
les éléments de changement de vitesse (7) sont des accouplements à friction ou des freins commutables par des pistons hydrauliques et le couple de rotation ou le couple de freinage transmissible par ceux-ci est réglable par la pression d'huile.

3. Système de commande électrohydraulique selon l'une des revendications précédentes,
**caractérisé en ce que**
le courant volumique circulant à travers la vanne (22) est proportionnel au courant électrique et le courant électrique appliqué pour la fermeture de la vanne (22) est réglable.

4. Système de commande électrohydraulique selon l'une des revendications précédentes,
**caractérisé en ce qu'**
il est prévu sur chaque élément de changement de vitesse (7) un capteur de pression (24) et sur la boîte de vitesses au moins un détecteur de vitesse de rotation (4; 6; 9), dont les signaux peuvent être évalués dans l'unité de commande (20).

5. Système de commande électrohydraulique selon l'une des revendications précédentes,
**caractérisé en ce qu'**
en fonctionnement normal, chaque changement de vitesse est effectué uniquement par transmission de signaux électriques et peut être commandé par l'unité de commande (20) par l'intermédiaire d'une régulation combinée pression/vitesse de rotation.

6. Système de commande électrohydraulique selon l'une des revendications précédentes,
**caractérisé en ce que**
la vanne de changement de vitesse de secours (21) peut être actionnée mécaniquement et connectée par des éléments de transmission mécaniques depuis la cabine de conduite.

7. Système de commande électrohydraulique selon l'une des revendications précédentes,
**caractérisé en ce que**
lors de l'actionnement de la vanne de changement de vitesse de secours (21), tous les dispositifs de commande électriques sont connectés sans courant.

8. Système de commande électrohydraulique selon l'une des revendications précédentes,
**caractérisé en ce que**
sur la vanne de changement de vitesse de secours (21) et/ou sur un dispositif d'actionnement associé, des capteurs reconnaissent l'actionnement de la vanne de changement de vitesse de secours (21) et transmettent des signaux correspondants au dispositif de commande (20).

9. Système de commande électrohydraulique selon l'une des revendications précédentes,
**caractérisé en ce que**
la vanne (22) peut être commandée aussi bien électriquement qu'hydrauliquement.
